# EUROPÄISCHE PATENTSCHRIFT

(11) **EP 3 691 937 B1**
(45) Veröffentlichungstag und Bekanntmachung des Hinweises auf die Patenterteilung: **26.05.2021**
(21) Anmeldenummer: 18778888.0
(22) Anmeldetag: 25.09.2018
(51) Int. Cl.: B60S 3/04

(54) **FAHRZEUGBEHANDLUNGSANLAGE MIT SIGNALEINRICHTUNG UND VERFAHREN ZUR ERMITTLUNG UND DARSTELLUNG VON EINFAHRTSINFORMATIONEN**
VEHICLE CLEANING SYSTEM WITH SIGNALLING INSTALLATION AND METHOD TO DETERMINE AND DISPLAY VEHICLE ENTRANCE INFORMATION
SYSTÈME DE NETTOYAGE DE VÉHICULES AVEC INSTALLATION DE SIGNALISATION ET MÉTHODE DE DÉTERMINATION ET REPRÉSENTATION D'INFORMATIONS D'ENTRÉE DE VÉHICULES

(30) Priorität: 06.10.2017 DE 102017123271
(43) Veröffentlichungstag der Anmeldung: 12.08.2020
(73) Patentinhaber: WashTec Holding GmbH, 86153 Augsburg (DE)
(72) Erfinder: KIRCHEIS, Richard, 86169 Augsburg (DE)
(74) Vertreter: Winter, Brandl - Partnerschaft mbB
(86) Internationale Anmeldenummer: PCT/EP2018/075952
(87) Internationale Veröffentlichungsnummer: WO 2019/068516

(56) Entgegenhaltungen:
- DE-U1- 29 723 828
- DE-U1-202013 103 562
- US-A1- 2014 223 677

## Beschreibung

### Technisches Gebiet

Die vorliegende Erfindung bezieht sich auf eine Signaleinrichtung gemäß dem Oberbegriff des Anspruchs 1, insbesondere auf eine Einfahrtsampel für eine Fahrzeugbehandlungsanlage. Des Weiteren bezieht sich die Erfindung auf ein Verfahren zur Ermittlung und Darstellung von Einfahrtsinformationen.

### Stand der Technik

Stand der Technik sind Einfahrtsampeln, die bei der Einfahrt eines Fahrzeugs in eine Fahrzeugwaschanlage drei Zustände anzeigen und dem Fahrer damit signalisieren, dass das Fahrzeug eine bestimmte Position noch nicht erreicht, erreicht bzw. überschritten hat. Dabei befindet sich die Anzeige solange in einem Zustand, solange nicht ein anderer Zustand erreicht wird. Zwischen der Aufforderung zum Einfahren (=Vor) und dem Erreichen der Halteposition (=Stopp) werden dem Fahrer keine Informationen bezüglich des Fortschritts des Einfahrtsvorgangs geliefert. Das bedeutet, dass es möglich ist, je nach Reaktionszeit des Fahrers oder Bremsweg des Fahrzeugs, einen Schaltpunkt (bspw. Stopp) zu überfahren. In dieser Situation wird dem Fahrer das Zurücksetzen des Fahrzeugs (=Zurück) signalisiert. Dieser Vorgang benötigt jedoch Zeit. Manche Fahrer fahren daher zu vorsichtig in die Fahrzeugwaschanlage ein, was ebenfalls zu Verzögerungen führt.

Portalwaschanlagen mit einer Positionsanzeige bzw. einer Bewegungsanzeige werden beispielsweise in DE 20 2013 103562 U1 und US 2014/223677 A1 offenbart.

### Offenbarung der Erfindung

Aufgabe der vorliegenden Erfindung ist es deshalb, Mittel und Wege bereitzustellen, bei einer Fahrzeugbehandlungsanlage eine raschere Abfertigung eines zu behandelnden Fahrzeugs zu erreichen.

Diese Aufgabe wird hinsichtlich einer Fahrzeugbehandlungsanlage durch Merkmale des Anspruchs 1 und hinsichtlich eines entsprechenden Verfahrens durch Merkmale des Anspruchs 8 gelöst. Vorteilhafte Weiterbildungen sind Gegenstand der Unteransprüche.

Eine erfindungsgemäße Fahrzeugbehandlungsanlage weist eine Signaleinrichtung mit zumindest einem Sensor und einem Signalgeber auf.

Der zumindest eine Sensor kann eine Position eines sich der Fahrzeugbehandlungsanlage nähernden Fahrzeugs detektieren. Es können verschiedene Messverfahren zur Ermittlung der Position des sich nährenden Fahrzeugs angewandt werden. So können Ultraschall, Radar, Laser, optische Verfahren, Laufzeitmessungen, Triangulationsverfahren oder Ähnliches angewandt werden. Prinzipiell können auf das sich der Fahrzeugbehandlungsanlage nähernde Fahrzeug elektromagnetische Wellen gerichtete werden und kann anhand reflektierter Wellen auf die Position des Fahrzeugs zurückgeschlossen werden.

Der Signalgeber kann auf Grundlage der vom Sensor detektierten Position einem Fahrer des Fahrzeugs Anweisungen zum richtigen Fahrverhalten geben. "Richtiges Fahrverhalten" heißt, dass der Fahrer das Fahrzeug an einer vorbestimmten Stelle oder in einem vorbestimmten Abstellbereich abstellt. "Anweisung zum richtigen Fahrverhalten" heißt vor allem, dass dem Fahrer mitgeteilt wird, ob er das Fahrzeug an der vorbestimmten Stelle oder in dem vorbestimmten Abstellbereich abgestellt hat.

Der zumindest eine Sensor kann in einem vorbestimmten Anfahrbereich vor oder in der Fahrzeugbehandlungsanlage die Position des Fahrzeugs kontinuierlich detektieren und der Signalgeber weist zumindest zwei übereinander angeordnete Leuchten auf.

Die erfindungsgemäße Fahrzeugbehandlungsanlage zeichnet sich dadurch aus, dass der Signalgeber ein Signal ausgeben kann, welches sich kontinuierlich oder diskret entsprechend einer sich kontinuierlich verändernden Position des Fahrzeugs verändert.

In anderen Worten ausgedrückt, misst der Sensor den Relativabstand des Fahrzeugs im Verhältnis zu dem vorbestimmten Abstellbereich und gibt der Signalgeber entsprechend unterschiedlicher Relativabstände unterschiedliche aktive Signale aus. Zumindest sobald sich das Fahrzeug in dem vorbestimmten Anfahrbereich befindet, gibt der Signalgeber ein (erstes) Signal aus. Sobald sich das Fahrzeug innerhalb des vorbestimmten Anfahrbereichs bewegt bzw. sobald das Fahrzeug vor dem Erreichen des vorbestimmten Abstellbereichs eine gewisse Mindestpositionsänderung vollzogen hat, ändert sich das vom Signalgeber ausgegebene Signal bzw. gibt ein anderes (zweites) Signal aus.

Der Vorteil des erfindungsgemäßen Signalgebers ist, dass der Fahrer beim Anfahren an den vorbestimmten Abstellbereich nicht nur zeitnah Informationen über die sich ändernde Position des Fahrzeugs im Verhältnis zum vorbestimmten Abstellbereich erhält, sondern dass er aufgrund der Geschwindigkeit des sich ändernden Signals auch auf die Relativgeschwindigkeit des Fahrzeugs zurückschließen kann. Mittels dieser Informationen wird es dem Fahrer ermöglicht, das Fahrzeug ohne Zögern und damit zeiteffizient in dem vorbestimmten Abstellbereich abzustellen.

Ob das Signal kontinuierlich oder diskret ist, hängt von der Art des verwendeten Signalmittels ab. Wird beispielsweise eine dimmbare Leuchte verwendet, ist eine kontinuierlich Anzeige des Relativabstands des Fahrzeugs möglich. Werden hingegen mehrere Leuchten verwendet, welche lediglich einzeln oder in Kombination ein- oder ausgeschaltet werden können, ist nur eine diskrete Anzeige möglich. Aufgrund digitaler Datenverarbeitung ist zu beachten, dass selbst Ausführungsformen, die in diesem Zusammenhang als kontinuierlicharbeitend bezeichnet werden, nur quasikontinuierlich-arbeitend umgesetzt werden. Ausschlaggebend für die Unterscheidung zwischen "diskret" und "kontinuierlich" ist im Rahmen dieser Erfindung, ob ein Fahrer den Übergang zwischen zwei unterschiedlichen Signalen als fließend oder als abrupt wahrnimmt. Dabei ist es irrelevant, ob es sich bei dem Signal um ein optisches und/oder akustisches Signal handelt.

Gemäß der Erfindung wird dem Fahrer die zu fahrende Geschwindigkeit des Fahrzeugs durch die Frequenz der gegebenen Signale angezeigt.

Die Änderung des Relativabstands zwischen Fahrzeug und vorbestimmten Abstellbereich über die Frequenz der gegebenen Signale mitzuteilen, kann vorteilhaft hinsichtlich des Platzbedarfs und der Herstellkosten sein, weil dann nur ein Mittel zum Geben zweier unterschiedlicher Signale notwendig ist.

Gemäß einem Aspekt der Erfindung kann der Signalgeber zumindest eine Leuchte einer ersten Art und zumindest eine Leuchte einer zweiten Art aufweisen, wobei die zumindest eine Leuchte der ersten Art ein Signal zum Vorwärtsfahren und die zumindest eine Leuchte der zweiten Art ein Signal zum Rückwärtsfahren geben kann.

Die Leuchten erster Art können sich von den Leuchten zweiter Art hinsichtlich Form, Farbe und/oder Position unterscheiden. Ebenso können die Leuchten erster und zweiter Art mehrfarbig, z.B. grün/rot, ausgeführt sein. Insbesondere können die Leuchten erster und zweiter Art jeweils mehrfarbig sein und beispielsweise als RGB-Leuchten ausgebildet sein, welche individuelle Farb- und/oder Helligkeitswerte annehmen können. Verwendete Farben können sich dabei an Farben allgemein bekannter Lichtzeichen orientieren (z.B. Verkehrsampeln, d.h. "Grün" bedeutet "Fahren", "Orange" bedeutet "Achtung" und "Rot" bedeutet "Stopp").

Beispielweise können die Leuchten zweiter Art, die den Relativabstand des Fahrzeugs zum vorbestimmten Abstellbereich beim Rückwärtsfahren anzeigen, hinter dem Fahrzeug positioniert sein und können die Leuchten erster Art, die den Relativabstand des Fahrzeugs zum vorbestimmten Abstellbereich beim Vorwärtsfahren anzeigen, vor dem Fahrzeug positioniert sein.

Unterschiedliche Positionen der Leuchten erster und zweiter Art können demnach zu einem ergonomisch optimierten System führen, was die Bedienung durch den Fahrer erleichtert.

Eine solche Erleichterung kann auch durch entsprechend gewählte, unterschiedliche Farben und Formen der Leuchten erster und zweiter Art erreicht werden. Beispielsweise können die Leuchten die Form von unterschiedlich ausgerichteten Pfeilen aufweisen oder können die Leuchten erster Art grün und können die Leuchten zweiter Art rot sein.

Gemäß einem Aspekt der Erfindung kann der Signalgeber zumindest drei Leuchten derselben Art aufweisen, welche durch nacheinander An- und Ausschalten zumindest ein Lauflicht generieren können.

Genauer gesagt wird das Lauflicht erzeugt, indem in einem ersten Zustand eine erste Leuchte angeschaltet ist, während eine zur ersten Leuchte benachbarte zweite Leuchte und eine zur zweiten Leuchte benachbarte dritte Leuchte ausgeschaltet sind, in einem zweiten Zustand die zweite Leuchte angeschaltet ist, während die erste Leuchte und die dritte Leuchte ausgeschaltet sind, und in einem dritten Zustand die dritte Leuchte angeschaltet ist, während die erste Leuchte und die zweite Leuchte ausgeschaltet sind.

Es ist auch vorstellbar, dass nicht nur einzelne in Reihe angeordnete Leuchten nacheinander ein- bzw. ausgeschaltet werden, um ein Lauflicht zu erzeugen, sondern dass dafür nebeneinander angeordnete Gruppen an Leuchten nacheinander ein- bzw. ausgeschaltet werden. Zur Erzeugung des Lauflichts können auch dimmbare Leuchten zum Einsatz kommen, was die Bewegung des Lauflichts fließender erscheinen lassen kann.

Lauflichter rufen bei Menschen aufgrund der simulierten Bewegung einer Lichtquelle prinzipiell erhöhte Aufmerksamkeit hervor. Somit kann mittels des Lauflichts der Fahrer auf die Signaleinrichtung fokussiert werden, was diesen wiederum davon abhält, aufgrund anderweitiger Ablenkungen unnötig Zeit verstreichen zu lassen.

Gemäß einem Aspekt der Erfindung kann dem Fahrer die zu fahrende Richtung und Geschwindigkeit des Fahrzeugs mittels der Richtung und der Geschwindigkeit des Lauflichts in Abhängigkeit der Position des Fahrzeugs angegeben werden.

Die Richtung des Lauflichts entspricht der Richtung der simulierten Bewegung der durch das Lauflicht suggerierten bewegten Lichtquelle.

Die Geschwindigkeit des Lauflichts entspricht der Anzahl der nacheinander ein- bzw. ausgeschalteten Leuchten pro Zeit.

Gemäß einem Aspekt der Erfindung kann dem Fahrer die zu fahrende Richtung und Geschwindigkeit des Fahrzeugs mittels der Richtung und der Länge des Lauflichts in Abhängigkeit der Position des Fahrzeugs angegeben werden.

Die Länge des Lauflichts entspricht der Anzahl von angeschalteten Leuchten, die in einem stationären Zeitabschnitt des Lauflichts direkt nebeneinander angeordnet sind.

Dem Fahrer die zu fahrende Richtung und Geschwindigkeit des Fahrzeugs mittels Richtung, Geschwindigkeit und/oder Länge des Lauflichts anzugeben ist von Vorteil, da diese Art der Signalgebung Parallelen zum Winken beim händischen Einweisen eines Fahrzeugs aufweist und somit intuitiv für den Fahrer verständlich ist.

Gemäß einem Aspekt der Erfindung kann der Signalgeber zumindest drei Leuchten derselben Art aufweisen und kann dem Fahrer die zu fahrende Richtung und Geschwindigkeit des Fahrzeugs mittels einer sich in Abhängigkeit der Position des Fahrzeugs veränderlichen Anzahl direkt nebeneinander aktiv geschalteter Leuchten derselben Art angegeben werden.

Wird der Relativabstand des Fahrzeugs zum vorbestimmten Abstellbereich über einen zu diesem Relativabstand proportionalen Balken in Form nebeneinander angeordneter, angeschalteter Leuchten dem Fahrer direkt veranschaulicht, kann dem Fahrer der Abstand zu jeder Zeit bewusst gemacht werden. D.h., selbst wenn die Anzeige sich aufgrund einer Fehlfunktion nicht mehr aktualisiert, sprich die Anzeige einfriert, hat der Fahrer bei einem sofortigen Stoppen eine Vorstellung davon, wo sich in etwa das Fahrzeug relativ zum vorbestimmten Abstellbereich befindet.

Gemäß einem Aspekt der Erfindung kann der Signalgeber zumindest eine dimmbare und/oder farblich variable Leuchte aufweisen.

Die zumindest eine dimmbare Leuchte kann das ästhetische Erscheinungsbild der Signaleinrichtung in vorteilhafter Weise aufwerten. Da eine dimmbare Leuchte inhärent mehrere Arten von Signalen aussenden kann, kann die vorliegende Erfindung mittels einer einzigen dimmbaren Leuchte umgesetzt werden. Auch wenn mehrere Leuchten vorgesehen sind, kann daher die zumindest eine Leuchte bei Fehlfunktion von restlichen Leuchten eine Notlauffunktion erfüllen.

Wird eine farblich variable Leuchte wie beispielsweise eine RGB-Leuchte bei der Umsetzung der Erfindung verwendet, kann einem Fahrer das Erreichen des Stoppbereichs durch Aufleuchten der farblich variablen Leuchte bzw. Leuchten in einer ersten Farbe beispielsweise Rot signalisiert werden, wohingegen die Positionsinformationen vor und nach dem Stoppbereich dem Fahrer in einer anderen Farbe bzw. in anderen Farben, beispielsweise in Grün und/oder Orange, mitgeteilt werden können. Somit kann durch Verwendung einer farblich variablen Leuchte auf einfache Weise auf bekannte Farbcodes aus dem Sicherheitsbereich zurückgegriffen werden.

Die Erfindung betrifft auch eine Fahrzeugbehandlungsanlage mit einer Signaleinrichtung gemäß einem oder mehreren der obengenannten Aspekte.

Insbesondere handelt es sich bei der Fahrzeugbehandlungsanlage um eine Waschanlage für Kraftfahrzeuge, vorzugsweise eine Portalwaschanlage. Alternativ kann es sich bei der Waschanlage auch um eine Waschstraße handeln oder kann die erfindungsgemäße Fahrzeugbehandlungsanlage eine andere Art von Fahrzeugbehandlungsanlage sein.

Ein erfindungsgemäßes Verfahren zur Ermittlung und Signalisierung von Einfahrtsinformationen weist folgende Schritte auf
- Signalisieren, vorzugsweise Anzeigen einer Einfahrbereitschaft einer Fahrzeugbehandlungsanlage für ein Fahrzeug, vorzugsweise mittels eines Signalgebers in Form einer Anzeige,
- Signalisieren, vorzugsweise Anzeigen, einer Stoppaufforderung, vorzugsweise mittels des Signalgebers, und- Erfassen einer Distanz zwischen der Fahrzeugbehandlungsanlage und dem Fahrzeug, vorzugsweise mittels eines Sensors.

Bei dem erfindungsgemäßen Verfahren erfolgt das der erfassten Distanz entsprechende Signal mittels eines Signalgebers, welcher zumindest zwei übereinander angeordneten Leuchten aufweist. Die zu fahrende Geschwindigkeit des Fahrzeugs wird durch die Frequenz der gegebenen Signale angezeigt.

### Kurzbeschreibung der Zeichnungen

Die vorliegende Erfindung wird im Folgenden anhand bevorzugter Ausführungsbeispiele unter Bezugnahme auf die beigefügten Zeichnungen näher beschrieben. Es zeigen:
Fig. 1 eine schematische Perspektivansicht einer Fahrzeugbehandlungsanlage;
Fig. 2 ein schematisches Schaltbild einer erfindungsgemäßen Signaleinrichtung;
Fig. 3 ein Flussdiagramm eines erfindungsgemäßen Verfahren;
Fig. 4 eine schematische Darstellung einer ersten erfindungsgemäßen Ausführungsform;
Fig. 5 eine schematische Darstellung einer zweiten erfindungsgemäßen Ausführungsform;
Fig. 6 eine schematische Darstellung einer dritten erfindungsgemäßen Ausführungsform;
Fig. 7 eine schematische Darstellung einer vierten erfindungsgemäßen Ausführungsform; und
Fig. 8 eine schematische Darstellung einer fünften erfindungsgemäßen Ausführungsform.

Gleiche oder funktional äquivalente Merkmale sind in den einzelnen Figuren mit denselben Bezugszeichen versehen.

### Detaillierte Beschreibung bevorzugter Ausführungsformen

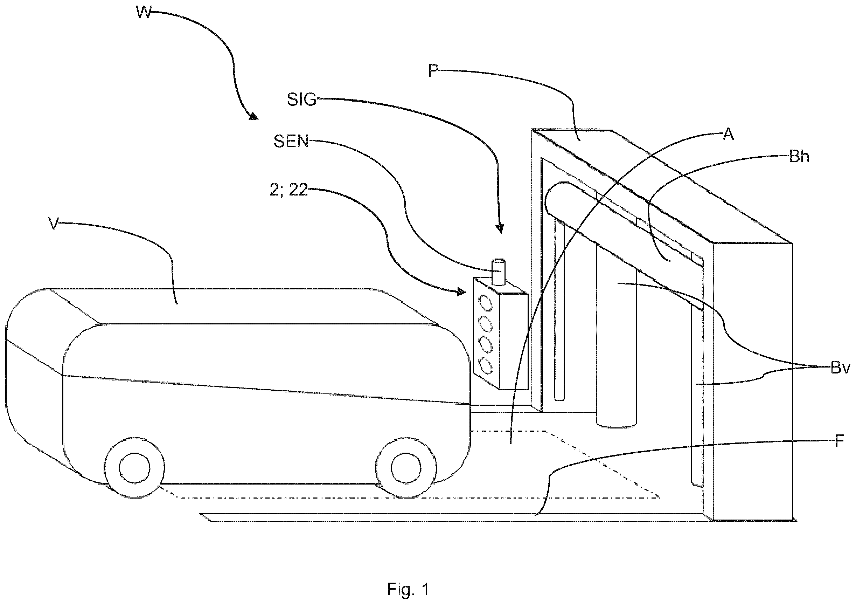

Figur 1 zeigt eine erfindungsgemäße Fahrzeugbehandlungsanlage W. Die Fahrzeugbehandlungsanlage W ist nach Waschportalbauart gebildet und weist demnach ein in Führungen F translatorisch bewegbares Waschportal P auf, welches mit einer translatorisch vertikal bewegbaren horizontalen Bürstenwalze Bh und mit zwei translatorisch horizontal bewegbaren vertikalen Bürstenwalzen Bv ausgestattet ist. Zwischen den Führungen F der Fahrzeugbehandlungsanlage W ist ein vorbestimmter Abstellbereich A als Freifläche vorgesehen, in welchen ein zu behandelndes Fahrzeug V abgestellt werden muss, um ordnungsgemäß behandelt, sprich im Falle einer Fahrzeugwaschanlage gewaschen, werden zu können. Die Fahrzeugbehandlungsanlage W weist des Weiteren abseits des vorbestimmten Abstellbereichs A eine Signaleinrichtung SIG auf, welche einem Fahrer des Fahrzeugs V beim ordnungsgemäßen Abstellen des Fahrzeugs V innerhalb des vorbestimmten Abstellbereichs A unterstützt.

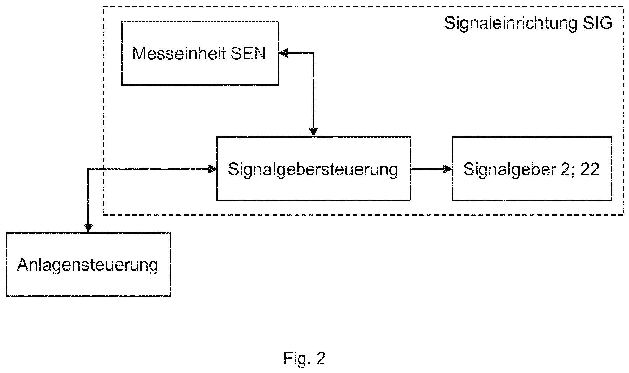

Wie in Figur 2 gezeigt, weist eine erfindungsgemäße Signaleinrichtung SIG eine Signalgebersteuerung auf, welche einen Signalgeber 2; 22 anhand von Informationen einer Messeinheit SEN steuert. Ist mittels der Signaleinrichtung SIG das Fahrzeug V in den vorbestimmten Abstellbereich A gebracht worden, sprich, wird von der Messeinheit SEN eine Distanz zwischen dem Fahrzeug V und dem vorbestimmten Abstellbereich A gemessen, welche gleich einem vorgegebenen Sollwert (beispielsweise Null) ist, wird von der Signalgebersteuerung ein Signal an eine Anlagensteuerung ausgegeben, welches dieser die Bereitschaft des zu behandelnden Fahrzeugs V für eine Fahrzeugbehandlung mitteilt.

Die Signaleinrichtung SIG kann wie in Figur 1 gezeigt separat vom Waschportal P ausgebildet sein. Alternativ wäre es aus möglich, sie in das Waschprotal P an dessen zum Fahrzeug V weisenden Seite zu integrieren. Wie in Figur 1 gezeigt, kann die Signaleinrichtung SIG lediglich eine Messeinheit SEN aufweisen. Alternativ wäre es auch möglich, mehrere Messeinheiten vorzusehen. Der Signalgeber 2; 22 und die Messeinheit SEN können, wie in Figur 1 gezeigt, örtlich relativ nah zueinander angeordnet sein. Alternativ wäre es auch möglich, die Messeinheit SEN an einer zum Messen des Abstandes des Fahrzeugs V zum vorbestimmten Abstellbereich A optimalen Stelle vorzusehen, beispielsweise in der Nähe der Führungen F, und den Signalgeber 2; 22 an einer bezüglich des Sichtfeldes des Fahrers des Fahrzeugs V optimalen Stelle vorzusehen, beispielsweise direkt vor dem Fahrzeug V.

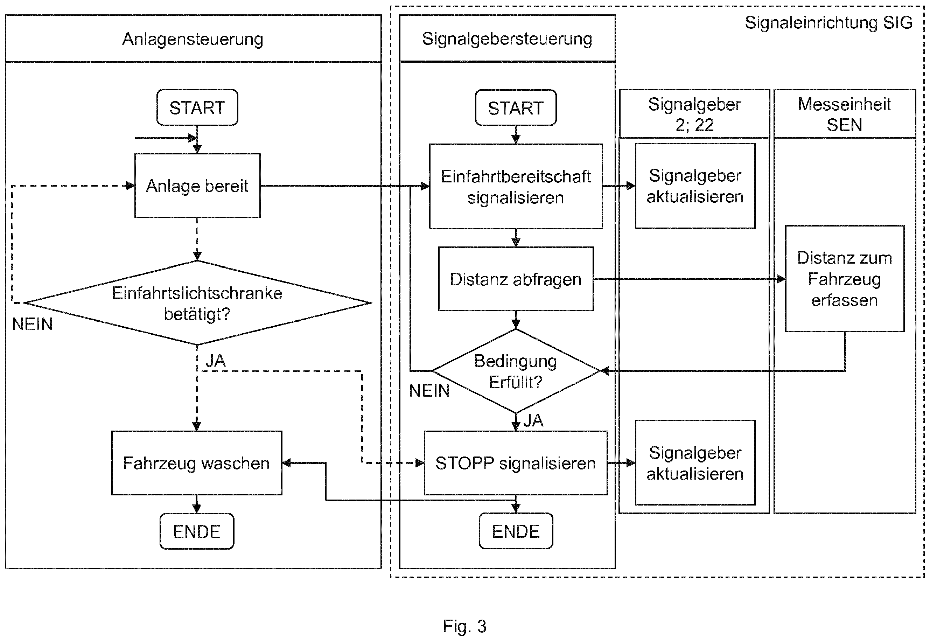

Ein Flussdiagramm, welches das Prozedere bei einer Steuerung der Fahrzeugwaschanlage W wiedergibt, ist in Figur 3 gezeigt.

Ist die Anlage W bereit, veranlasst die Anlagensteuerung die Signalgebersteuerung, die Bereitschaft der Anlage W für einfahrende Fahrzeuge, die sogenannte Einfahrbereitschaft, über den Signalgeber 2; 22 zu signalisieren. Über die Messeinheit SEN wird die Distanz zwischen dem einfahrenden Fahrzeug V und dem vorbestimmten Abstellbereich A gemessen. Die Signalgebersteuerung überprüft, ob die gemessene Distanz einem Sollwert entspricht. Entspricht die gemessene Distanz nicht dem Sollwert, wird der Signalgeber 2; 22 von der Signalgebersteuerung veranlasst, ein entsprechend der gemessenen Distanz aktualisiertes Signal auszugeben. Diese Schleife wird solange von der Signaleinrichtung durchlaufen, bis die gemessene Distanz dem Sollwert entspricht, sich das Fahrzeug V also in dem vorbestimmten Abstellbereich A befindet. Ist dies der Fall, wird der Signalgeber 2; 22 veranlasst, dem Fahrer "STOPP" zu signalisieren, und damit zum Halten des Fahrzeugs V aufzufordern. Steht das Fahrzeug V im vorbestimmten Abstellbereich A, gibt die Signalgebersteuerung bzw. die Signaleinrichtung ein entsprechendes Signal an die Anlagensteuerung, welche wiederum die Behandlung des Fahrzeugs V, im Falle einer Waschanlage das Waschen, veranlasst.

Mit gestrichelten Linien ist im Flussdiagramm in der Figur 3 das Vorgehen gemäß dem Stand der Technik veranschaulicht. Ohne dem Fahrer beim Einfahren in die Fahrzeugwaschanlage W eine Rückmeldung zu geben, wird erst bei Erreichen eines vorbestimmten Abstellbereichs ein "STOPP"-Signal vom Signalgeber ausgegeben. Eine Aktualisierung des Signalgebers während des Einfahrens findet nicht statt.

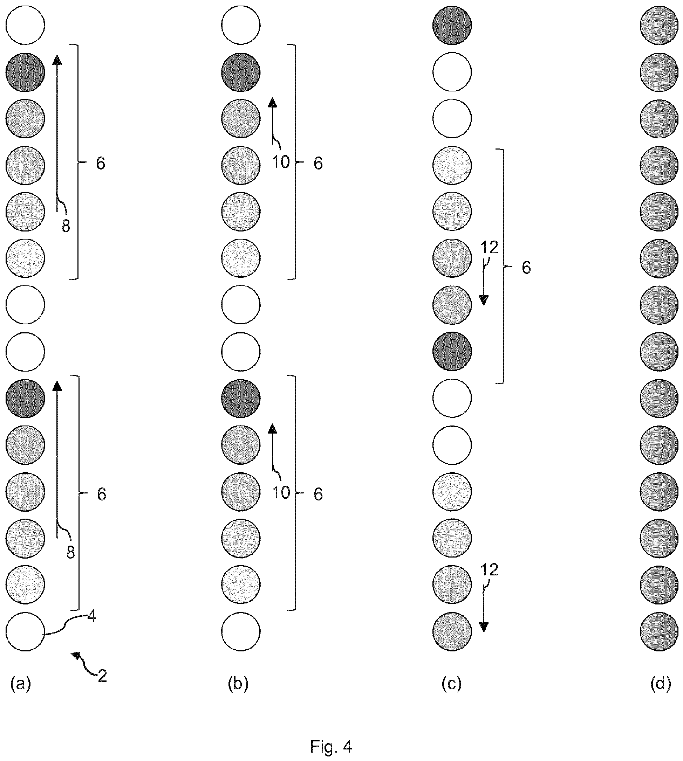

In Figur 4 ist eine erste Ausführungsform des Signalgebers 2 der vorliegenden Erfindung schematisch dargestellt. Der Signalgeber 2 weist vierzehn übereinander angeordnete, dimmbare Leuchten 4 auf. Solange das Fahrzeug V nicht im vorbestimmten Abstellbereich A ist, erzeugen die Leuchten 4 ein Lauflicht 6. Das Lauflicht wird durch Anschalten fünf nebeneinander angeordneter Leuchten 4 erzeugt, wobei die in Laufrichtung des Lauflichts 6 vorne angeordnete Leuchte 4 am stärksten leuchtet, und die anderen vier Leuchten 4 des Lauflichts 6 entgegen der Laufrichtung des Lauflichts 6 stufenweise schwächer leuchten, so dass diese gleichsam einen Schweif der vorderen Leuchte 4 bilden.

Wie durch unterschiedlich lange Pfeile 8, 10 und 12 symbolisiert, ist die Geschwindigkeit des Lauflichts 6 entsprechend der Distanz zwischen Fahrzeug V und vorbestimmten Abstellbereich A unterschiedlich groß.

Befindet sich das Fahrzeug V weiter entfernt von dem Abstellbereich A, bewegt sich das Lauflicht 6, wie durch den Pfeil 8 dargestellt, verhältnismäßig schnell (siehe Figur 4(a)). Kommt das Fahrzeug V dem vorbestimmten Abstellbereich A näher, wird das Lauflicht 6, wie durch den Pfeil 10 dargestellt, langsamer (siehe Figur 4(b)). Überfährt das Fahrzeug V den vorbestimmten Abstellbereich A, wechselt das Lauflicht 6, wie durch den Pfeil 12 dargestellt, die Richtung (siehe Figur 4(c)). Befindet sich das Fahrzeug V im vorbestimmten Abstellbereich A, leuchten alle Leuchten 4 gleichzeitig (siehe Figur 4(d)).

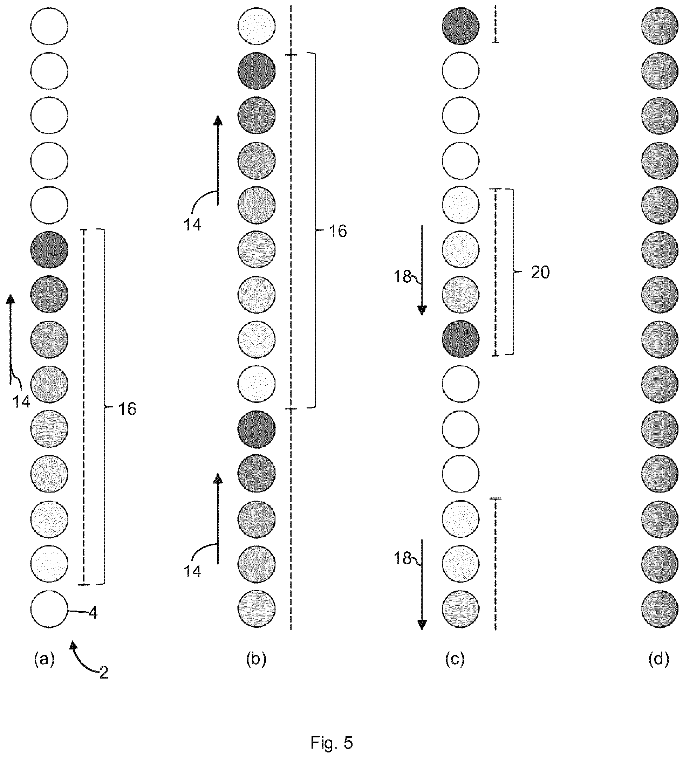

In Figur 5 ist eine zweite Ausführungsform des Signalgebers 2 der vorliegenden Erfindung schematisch dargestellt, welcher sich von dem Signalgeber 2 gemäß der ersten Ausführungsform lediglich hinsichtlich seiner Ansteuerung unterscheidet. Daher werden für die strukturellen Merkmale gleiche Bezugszeichen verwendet.

Wie bei der ersten Ausführungsform erzeugen die Leuchten 4 ein Lauflicht 6, solange das Fahrzeug V nicht im vorbestimmten Abstellbereich A ist. Das Lauflicht wird durch Anschalten nebeneinander angeordneter Leuchten 4 erzeugt, wobei die in Laufrichtung des Lauflichts 6 vorne angeordnete Leuchte 4 am stärksten leuchtet, und die anderen Leuchten 4 des Lauflichts 6 entgegen der Laufrichtung des Lauflichts 6 stufenweise schwächer leuchten, so dass diese gleichsam einen Schweif der vorderen Leuchte 4 bilden. Bei der zweiten Ausführungsform wird eine sich verringernde Distanz zwischen dem Fahrzeug V und dem vorbestimmten Abstellbereich A über die Frequenz und die Länge des Lauflichts 6 angezeigt. Wie bei der ersten Ausführungsform zeigt die Laufrichtung des Lauflichts 6 die erforderliche Fahrtrichtung an.

Wie durch Pfeile 14 und 18 dargestellt, bleibt die Geschwindigkeit des Lauflichts 6 unabhängig von der Distanz zwischen Fahrzeug V und vorbestimmten Abstellbereich A konstant und wechselt nur im Falle des Überfahrens (siehe Figur 5(c)) des vorbestimmten Abstellbereichs A seine Laufrichtung.

Befindet sich das Fahrzeug V weiter entfernt von dem vorbestimmten Abstellbereich A, ist das Lauflicht 6, wie durch eine Klammer 16 dargestellt, relativ lang (siehe die acht nebeneinander angeordneten angeschalteten Leuchten 4 in Figur 5(a)). Kommt das Fahrzeug V dem vorbestimmten Abstellbereich A näher, wird zunächst nur die Frequenz erhöht und nicht die Länge des Lauflichts 6 verändert (siehe Figur 5(b)). Überfährt das Fahrzeug V den vorbestimmten Abstellbereich A, wechselt das Lauflicht 6, wie durch den Pfeil 18 dargestellt, die Richtung (siehe Figur 5(c)). Da sich das Fahrzeug V in dem in Figur 5(c) gezeigten Zustand näher am vorbestimmten Abstellbereich A befindet als in dem in Figur 5(b) gezeigten Zustand, ist die Länge des Lauflichts 6, wie durch eine Klammer 20 dargestellt, reduziert. Befindet sich das Fahrzeug V im vorbestimmten Abstellbereich A, leuchten alle Leuchten 4 gleichzeitig (siehe Figur 5(d)).

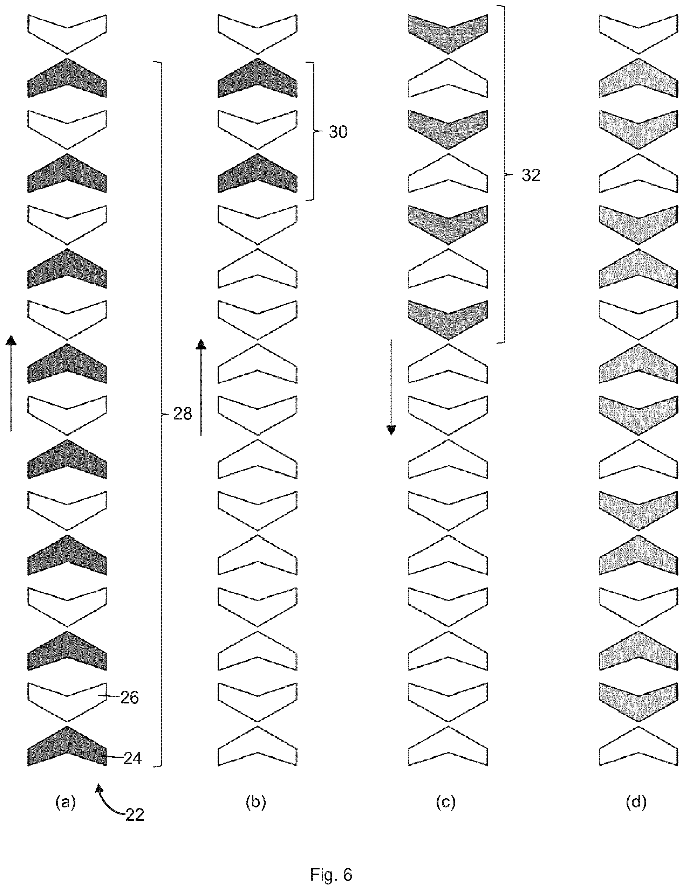

Die in den Figuren 6, 7 und 8 gezeigten Ausführungsformen des erfindungsgemäßen Signalgebers 22 unterscheiden sich untereinander lediglich in ihrer Ansteuerung.

Der Signalgeber 22 weist acht Leuchten 24 einer ersten Art und acht Leuchten 26 einer zweiten Art auf. Die Leuchten 24 erster Art haben die Form nach oben zeigender Pfeile. Die Leuchten 26 zweiter Art haben die Form nach unten zeigender Pfeile. Die Leuchten 24 erster Art und die Leuchten 26 zweiter Art sind übereinander in Reihe und auf verschachtelte Weise angeordnet. D.h., jede Leuchte 24 erster Art grenzt lediglich an Leuchten 26 zweiter Art und umgekehrt. Die unterste Leuchte ist eine Leuchte 24 erster Art. Die oberste Leuchte ist eine Leuchte 26 zweiter Art.

Wird der Signalgeber 22 gemäß einer dritten erfindungsgemäßen Ausführungsform angesteuert, wird der Relativabstand des Fahrzeugs V zum vorbestimmten Abstellbereich A über eine Anzahl direkt nebeneinander angeordneter aktiver Lampen visualisiert.

Befindet sich das Fahrzeug V weiter entfernt von dem vorbestimmten Abstellbereich A, werden alle Leuchten 24 erster Art, wie durch eine Klammer 28 dargestellt, angeschaltet (siehe Figur 6(a)). Kommt das Fahrzeug V dem vorbestimmten Abstellbereich A näher, werden der Reihe nach von unten einzelne Leuchten 24 erster Art ausgeschaltet (siehe die durch eine Klammer 32 indizierte verringerte Anzahl angeschalteter Leuchten 24 erster Art in Figur 6(b)). Überfährt das Fahrzeug V den vorbestimmten Abstellbereich A, werden alle Leuchten 24 erster Art ausgeschaltet und wird eine dem Relativabstand zwischen dem Fahrzeug V und dem vorbestimmten Abstellbereich A entsprechende Anzahl an Leuchten 26 zweiter Art von oben der Reihe nach angeschaltet (siehe Klammer 32 in Figur 6(c)). Da sich das Fahrzeug V in dem in Figur 6(c) gezeigten Zustand näher am vorbestimmten Abstellbereich A befindet als in dem in Figur 6(b) gezeigten Zustand, ist die Anzahl der in dem in Figur 6(c) gezeigten Zustand angeschalteter Leuchten 26 zweiter Art geringer als die Anzahl der in dem in Figur 6(b) gezeigten Zustand angeschalteter Leuchten 24 erster Art. Befindet sich das Fahrzeug V im vorbestimmten Abstellbereich A, leuchten Paare benachbarter Leuchten 24, 26 erster Art und zweiter Art (siehe Figur 6(d)).

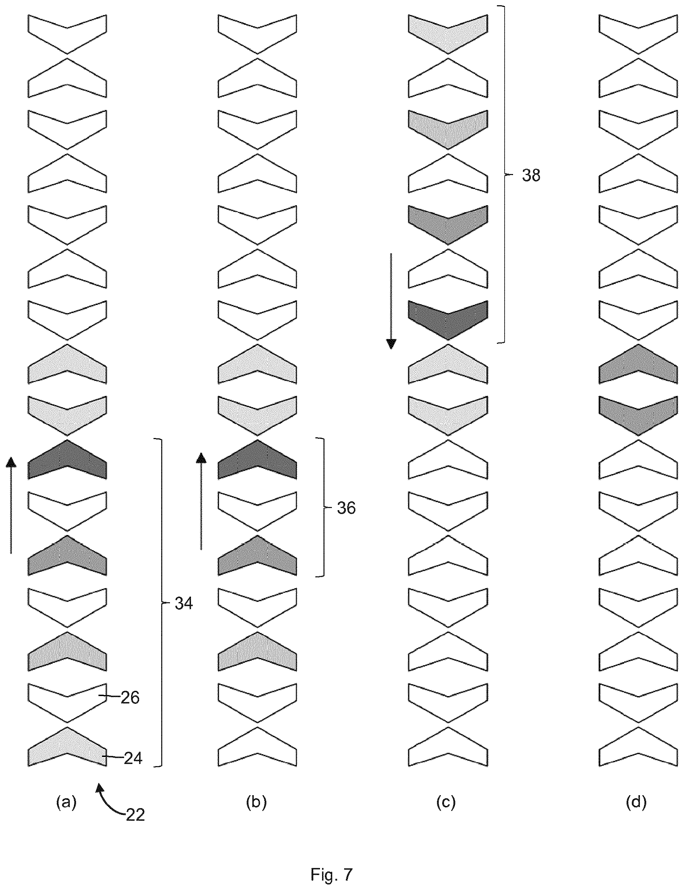

Wird der Signalgeber 22 gemäß einer vierten erfindungsgemäßen Ausführungsform angesteuert (siehe Figur 7), wird der Relativabstand des Fahrzeugs V zum vorbestimmten Abstellbereich A über eine Länge eines Lauflichts und eine Anordnung aktiv geschalteter Leuchten visualisiert.

Befindet sich das Fahrzeug V weiter entfernt von dem vorbestimmten Abstellbereich A, werden die unteren vier Leuchten 24 erster Art, jeweils unten beginnend der Reihe nach an- und ausgeschaltet (siehe Klammer 34 in Figur 7(a)). Kommt das Fahrzeug V dem vorbestimmten Abstellbereich A näher, verringert sich die Anzahl der intermittierend angeschalteten Leuchten 24 erster Art, wobei die Leuchten 24 erster Art von unten her der Reihe nach ausgeschaltet werden (siehe die durch eine Klammer 36 indizierte verringerte Anzahl angeschalteter Leuchten 24 erster Art in Figur 7(b)). Überfährt das Fahrzeug V den vorbestimmten Abstellbereich A, werden alle unteren vier Leuchten 24 erster Art ausgeschaltet und wird eine dem Relativabstand zwischen dem Fahrzeug V und dem vorbestimmten Abstellbereich A entsprechende Anzahl an Leuchten 26 zweiter Art von oben der Reihe nach intermittierend angeschaltet (siehe Klammer 38 in Figur 7(c)). Da sich das Fahrzeug V in dem in Figur 7(c) gezeigten Zustand genauso weitentfernt vom vorbestimmten Abstellbereich A befindet als in dem in Figur 7(a) gezeigten Zustand, ist die Anzahl der in dem in Figur 7(c) gezeigten Zustand intermittierend angeschalteter Leuchten 26 zweiter Art gleich der Anzahl der in dem in Figur 7(a) gezeigten Zustand angeschalteter Leuchten 24 erster Art. Befindet sich das Fahrzeug V im vorbestimmten Abstellbereich A, leuchtet das mittlere Paar der benachbarten Leuchten 24, 26 erster Art und zweiter Art (siehe Figur 7(d)) heller, als es während der in den in den Figuren 7(a) bis 7(c) gezeigten Zustände leuchtet.

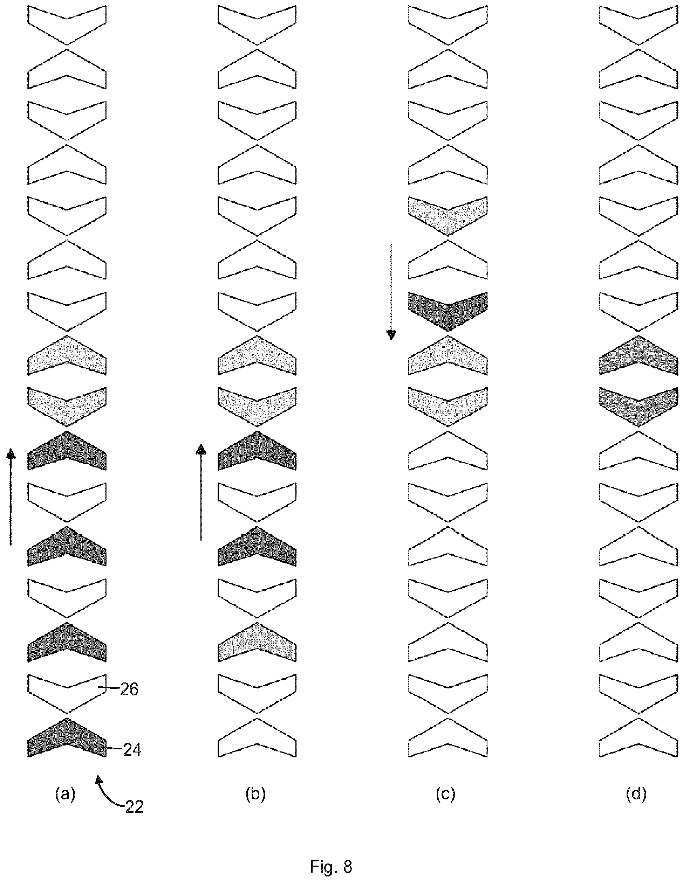

Die Ansteuerung des Signalgebers 22 gemäß einer fünften erfindungsgemäßen Ausführungsform (siehe Figur 8) unterscheidet sich von der Ansteuerung gemäß der vierten Ausführungsform lediglich dahingehend, dass die Leuchten dauerhaft und nicht intermittierend angeschaltet werden.

Bei der dritten, vierten und fünften Ausführungsform der Erfindung ist es besonders vorteilhaft, mehrfarbige, d.h. farblich variable, Leuchten zu verwenden. Dementsprechend würden die Leuchten in den Figuren 6(d), 7(d) und 8(d) in Rot und in den Figuren 6(a) bis (c), 7(a) bis (c) und 8(a) bis (c) in einer anderen Farbe bzw. in anderen Farben, beispielsweise in Grün und/oder Orange, aufleuchten.

Die in den Figuren 1 bis 8 gezeigten und oben beschriebenen Ausführungsformen der erfindungsgemäßen Signaleinrichtung stellen lediglich fünf mögliche Umsetzungen der beanspruchten Erfindung dar.

## Patentansprüche

1. Fahrzeugbehandlungsanlage (W) mit einer Signaleinrichtung (SIG) mit
zumindest einem Sensor (SEN), welcher in einem vorbestimmten Anfahrbereich (A) vor oder in der Fahrzeugbehandlungsanlage (W) eine Position eines sich der Fahrzeugbehandlungsanlage (W) nähernden Fahrzeugs (V) kontinuierlich detektieren kann, und
einem Signalgeber (2; 22), welcher auf Grundlage der vom Sensor (SEN) detektierten Position einem Fahrer des Fahrzeugs (V) Anweisungen zum richtigen Fahrverhalten geben kann, welcher zumindest zwei übereinander angeordnete Leuchten (4; 24; 26) aufweist und welcher ein einer sich kontinuierlich verändernden Position des Fahrzeugs (V) entsprechendes sich kontinuierlich oder diskret veränderndes Signal ausgeben kann,
**dadurch gekennzeichnet, dass**
dem Fahrer die zu fahrende Geschwindigkeit des Fahrzeugs (V) durch die Frequenz der gegebenen Signale angezeigt wird.

2. Fahrzeugbehandlungsanlage (W) nach Anspruch 1, **dadurch gekennzeichnet, dass** der Signalgeber (2; 22) zumindest eine Leuchte (24) einer ersten Art und zumindest eine Leuchte (26) einer zweiten Art aufweist, wobei die zumindest eine Leuchte (24) der ersten Art ein Signal zum/beim Vorwärtsfahren und die zumindest eine Leuchte (26) der zweiten Art ein Signal zum/beim Rückwärtsfahren geben kann.

3. Fahrzeugbehandlungsanlage (W) nach Anspruch 1 oder 2, **dadurch gekennzeichnet, dass** der Signalgeber (2; 22) zumindest drei Leuchten (4; 24; 26) derselben Art aufweist, welche durch nacheinander An- und Ausschalten zumindest ein Lauflicht (6) generieren können.

4. Fahrzeugbehandlungsanlage (W) nach Anspruch 3, **dadurch gekennzeichnet, dass** dem Fahrer die zu fahrende Richtung und Geschwindigkeit des Fahrzeugs (V) mittels der Richtung und der Geschwindigkeit des Lauflichts (6) in Abhängigkeit der Position des Fahrzeugs (V) angegeben wird.

5. Fahrzeugbehandlungsanlage (W) nach Anspruch 3 oder 4, **dadurch gekennzeichnet, dass** dem Fahrer die zu fahrende Richtung und Geschwindigkeit des Fahrzeugs (V) mittels der Richtung und der Länge des Lauflichts (6) in Abhängigkeit der Position des Fahrzeugs (V) angegeben wird.

6. Fahrzeugbehandlungsanlage (W) nach Anspruch 1 oder 2, **dadurch gekennzeichnet, dass** der Signalgeber (2; 22) zumindest drei Leuchten (4; 24; 26) derselben Art aufweist und dem Fahrer die zu fahrende Richtung und Geschwindigkeit des Fahrzeugs (V) mittels einer sich in Abhängigkeit der Position des Fahrzeugs (V) veränderlichen Anzahl direkt nebeneinander aktiv geschalteter Leuchten (4; 24; 26) derselben Art angegeben wird.

7. Fahrzeugbehandlungsanlage (W) nach einem der vorhergehenden Ansprüche, **dadurch gekennzeichnet, dass** der Signalgeber (2; 22) zumindest eine dimmbare und/oder farblich variable Leuchte (4; 24; 26) aufweist.

8. Verfahren zur Ermittlung und Signalisierung von Einfahrtsinformationen mit den Schritten
- Signalisieren einer Einfahrbereitschaft einer Fahrzeugbehandlungsanlage (W) für ein Fahrzeug (V),
- Signalisieren einer Stoppaufforderung,
- Erfassen einer Distanz zwischen der Fahrzeugbehandlungsanlage (W) und dem Fahrzeug (V), und
- Ausgeben eines der erfassten Distanz entsprechenden Signals mittels eines Signalgebers (2; 22), der zumindest zwei übereinander angeordneten Leuchten (4; 24; 26) aufweist,
**gekennzeichnet durch**
- Anzeigen der zu fahrenden Geschwindigkeit des Fahrzeugs (V) durch die Frequenz der gegebenen Signale.

## Claims

1. A vehicle treatment system (W) having a signalling device (SIG) with
at least one sensor (SEN) which can continuously detect a position of a vehicle (V) approaching the vehicle treatment system (W) in a predetermined approach region (A) in front of or in the vehicle treatment system (W), and
a signal generator (2; 22) which, on the basis of the position detected by the sensor (SEN), can give instructions for the correct driving behaviour to the driver of the vehicle (V), which comprises at least two lights (4; 24; 26) arranged above one another, and which can output a signal which changes continuously or discretely and corresponds to a continuously changing position of the vehicle (V),
**characterized in that**
the speed to be driven by the vehicle (V) is displayed to the driver by the frequency of the signals generated.

2. The vehicle treatment system (W) according to claim 1, **characterized in that** the signal generator (2; 22) comprises at least one light (24) of a first kind and at least one light (26) of a second kind, wherein the at least one light (24) of the first kind can output a signal for/during advancing and the at least one light (26) of the second kind a signal for/during backing.

3. The vehicle treatment system (W) according claim 1 or 2, **characterized in that** the signal generator (2; 22) comprises at least three lights (4; 24; 26) of the same kind which can generate at least one chaser light (6) by being switched on and off sequentially.

4. The vehicle treatment system (W) according to claim 3, **characterized in that** the direction to be driven and the speed of the vehicle (V) are displayed to the driver by means of the direction and the speed of the chaser light (6) as a function of the position of the vehicle (V).

5. The vehicle treatment system (W) according to claim 3 or 4, **characterized in that** the direction to be driven and the speed of the vehicle (V) are displayed to the driver by means of the direction and the length of the chaser light (6) as a function of the position of the vehicle (V).

6. The vehicle treatment system (W) according claim 1 or 2, **characterized in that** the signal generator (2; 22) comprises at least three lights (4; 24; 26) of the same kind and the direction to be driven and the speed of the vehicle (V) are displayed to the driver by means of a number of lights (4; 24; 26) of the same kind which are switched actively directly next to each other, wherein the number varies as a function of the position of the vehicle (V).

7. The vehicle treatment system (W) according to one of the preceding claims, **characterized in that** the signal generator (2; 22) comprises at least one dimmable and/or colour-variable light (4; 24; 26).

8. A method for determining and signalling entry information, comprising the steps of
- signalling entry readiness of a vehicle treatment system (W) for a vehicle (V);
- signalling a stop request,
- detecting a distance between the vehicle treatment system (W) and the vehicle (V), and
- outputting a signal corresponding to the detected distance by means of a signal generator (2; 22) comprising at least two lights (4; 24; 26) arranged above one another,
**characterized by**
displaying the speed to be driven by the vehicle (V) by the frequency of the signals generated.

## Revendications

1. Installation de traitement de véhicule (W) avec un dispositif de signal (SIG) avec
au moins un capteur (SEN), qui peut détecter en continu dans une zone d'approche (A) prédéterminée devant ou dans l'installation de traitement de véhicule (W) une position d'un véhicule (V) s'approchant de l'installation de traitement de véhicule (W), et
un générateur de signaux (2 ; 22) qui peut donner sur la base de la position détectée par le capteur (SEN) à un conducteur du véhicule (V) des instructions pour le bon comportement de conduite qui présente au moins deux lampes (4; 24; 26) agencées l'une au dessus de l'autre et qui peut sortir un signal se modifiant en continu ou de manière discrète correspondant à une position se modifiant en continu du véhicule (V),
**caractérisée en ce que**
la vitesse de déplacement du véhicule (V) est indiquée au conducteur par la fréquence des signaux donnés.

2. Installation de traitement de véhicule (W) selon la revendication 1, **caractérisée en ce que** le générateur de signaux (2 ; 22) présente au moins une lampe (24) d'un premier type et au moins une lampe (26) d'un second type, dans laquelle l'au moins une lampe (24) du premier type peut donner un signal pour/lors de la marche avant et l'au moins une lampe (26) du second type un signal pour/lors de la marche arrière.

3. Installation de traitement de véhicule (W) selon la revendication 1 ou 2, **caractérisée en ce que** le générateur de signaux (2 ; 22) présente au moins trois lampes (4 ; 24 ; 26) du même type qui peuvent générer par la mise en et hors service les unes après les autres au moins un chenillard (6).

4. Installation de traitement de véhicule (W) selon la revendication 3, **caractérisée en ce que** le sens et la vitesse de déplacement du véhicule (V) sont indiqués au conducteur au moyen du sens et de la vitesse du chenillard (6) en fonction de la position du véhicule (V).

5. Installation de traitement de véhicule (W) selon la revendication 3 ou 4, **caractérisée en ce que** le sens et la vitesse de déplacement du véhicule (V) sont indiqués au conducteur au moyen du sens et de la longueur du chenillard (6) en fonction de la position du véhicule (V).

6. Installation de traitement de véhicule (W) selon la revendication 1 ou 2, **caractérisée en ce que** le générateur de signaux (2 ; 22) présente au moins trois lampes (4 ; 24 ; 26) du même type et le sens et la vitesse de déplacement du véhicule (V) sont indiqués au conducteur au moyen d'un nombre se modifiant en fonction de la position du véhicule (V) de lampes (4 ; 24 ; 26) montées directement les unes à côté des autres activement du même type.

7. Installation de traitement de véhicule (W) selon l'une des revendications précédentes, **caractérisée en ce que** le générateur de signaux (2 ; 22) présente au moins une lampe avec variateur et/ou variable en couleur (4 ; 24 26).

8. Procédé de détermination et de signalisation d'informations d'entrée avec les étapes
- la signalisation d'une disposition d'entrée d'une installation de traitement de véhicule (W) pour un véhicule (V),
- la signalisation d'une exigence d'arrêt,
- la détection d'une distance entre l'installation de traitement de véhicule (W) et le véhicule (V), et
- la sortie d'un signal correspondant à la distance détectée au moyen d'un générateur de signaux (2 ; 22) qui présente au moins deux lampes (4 ; 24 ; 26) agencées l'une au-dessus de l'autre,
**caractérisé par**
- l'indication de la vitesse de déplacement du véhicule (V) par la fréquence des signaux donnés.
